# EUROPÄISCHE PATENTANMELDUNG

(11) **EP 3 657 466 A1**
(43) Veröffentlichungstag der Anmeldung: **27.05.2020**
(21) Anmeldenummer: 19020635.9
(22) Anmeldetag: 13.11.2019
(51) Int. Cl.: G08G 1/16, E01F 9/65, E01F 9/608, G08G 1/01, G08G 1/04

(54) **WILDWARNER**

(30) Priorität: 13.11.2018 CH 13982018
(71) Anmelder: Animot Motion Expert GmbH, 2620 Neunkirche (AT)
(72) Erfinder: Dahl, Sabine, DE-84184 Tiefenbach (DE); Loder-Schranz, Robert, AT-8132 Pernegg (AT)
(74) Vertreter: Alder, Hans Rudi

(57) **Zusammenfassung**

Ein Verfahren und eine Warnvorrichtung (1) zum Durchführen des Verfahrens, wobei die Warnvorrichtung (1) eine mit einer Gehäuse-Baugruppe (11) beweglich verbindbare Halterungs-Baugruppe (12) umfasst, welche an einer tragenden Struktur (13) in Strassennähe, insbesondere an einem Strassenleitpfahl und/oder an einem Felsen, unabhängig von der Inklination der tragenden Struktur (13), in gewünschter Weise ausrichtbar und befestigbar ist. In der Gehäuse-Baugruppe (11) sind mindestens eine autonome Stromversorgung (3), insbesondere ein Akku (4) und ein Solarmodul (5), sowie ein Erkennungssensor (6), eine Auswerte-Elektronik (7) und ein Signalgeber (8) untergebracht.

## Beschreibung

Die vorliegende Erfindung betrifft ein Verfahren zur Vermeidung von Wildunfällen gemäss Oberbegriff des Anspruchs 1 und eine Vorrichtung dazu gemäss Oberbegriff des Anspruchs 3.

Verkehrswege führen immer wieder durch Gebiete, in denen unzählige Wildtiere, insbesondere Gross- und Kleinwild, d.h. Hirsche, Rehe, Wildschweine, Hasen, Füchse, Marder, Igel, Frösche, etc. die Fahrbahn überqueren. Es versteht sich, dass es in diesen Gebieten öfters zu schweren Kollisionen oder Schleuderunfällen mit tödlichen Ausgang kommt. In Österreich bspw. geht der Dachverband Jagd von über 11'000 solcher Gefahrenstellen aus. Der Deutsche Jagdverband spricht von über 220'000 solcher Unfälle. Es versteht sich, dass deshalb nicht nur Autofahrer, sondern auch viele Organisationen, Verbände und Versicherungen an wirkungsvollen Massnahmen zur Verringerung von Wildunfällen interessiert sind, insbesondere weil die schallgedämmten Geräusche heutiger Fahrzeuge und zukünftiger Elektrofahrzeuge nicht mehr ausreichen, um die Wildtiere vom Überqueren der Fahrbahn abzuhalten.

Es werden deshalb schon seit längerem passive Systeme eingesetzt, insbesondere Absperrungen, Wildschutzzäune, Grünbrücken, Wildtunnel, Haarsäcklein, CD-Blincker, Duftzaun, Duftschaum-Körbe und -Pfropfen oder Wildwarnreflektoren, wie sie bspw. in der US5277516 oder DE102013021465 beschrieben werden. Leider führen diese Systeme rasch zu Gewöhnungseffekten bei den Tieren. Eine effektive und nachhaltige Wirkung dieser Abschreckungssysteme konnte bisher wissenschaftlich nicht nachgewiesen werden. In letzter Zeit werden deshalb vermehrt aktive Systeme zur Abschreckung des Wildes eingesetzt, wie bspw. aus der DE4033382 bekannt. Bei diesem System wird bei Annäherung eines Fahrzeug ein akustisches Signal generiert um das Wild abzuschrecken. Leider reagiert dieses System nur auf das Scheinwerferlicht und bringt keine wesentliche Verbesserung beim der Unfallverhütung. Bei dem in der EP1790774 beschriebene System wird eine Wildabschreck-Einrichtung mit Hilfe eines fahrzeugeigenen Senders aktiviert und ermöglicht damit die Erzeugung eines ausreichend leistungsstarken Fahrzeugsignals für die empfangende Wildabschreck-Einrichtung auch bei Tage und im Bereich von Kuppen und Kurven. Die serienmässige Ausrüstung von Fahrzeugen jeglicher Art mit derartigen Sendern erweist sich jedoch als nicht durchsetzbar. Mit der DE4140662 wird ein System offenbart, welches die Anwesenheit von Wild in Nähe der Fahrbahn detektiert und diese mit Hilfe von Blinkeinrichtungen anzeigt. Das häufig unbegründete Blinken bei unbefahrenen Strassen ist von den Jägern unerwünscht und führt auch zu einer raschen Gewöhnung der Wildtiere.

In jüngster Zeit sind deshalb aktive Systeme, wie bspw. in der US2002145519 beschrieben, vorgeschlagen worden, welche sowohl die Anwesenheit von Wärme abstrahlenden Tieren oder Menschen, insbesondere auch von Kleintieren, wie Igel, detektieren, als auch die nahenden Autofahrer mit optischen Signalen auf die Gefahr aufmerksam machen. Weiterentwicklungen dieser Systeme, wie bspw. in der US2015123816 oder DE102004050597 dargestellt, weisen elektronische Kommunikationssysteme auf, welche die Daten über die Anwesenheit von Wild an andere Systemkomponenten zur weiteren Auswertung weitergeben, insbesondere um Warn- und Abschreck-Netzwerke zu aktivieren, wie bspw. in der WO2013144312 beschrieben, oder um auf ein herannahendes Fahrzeug direkt Einfluss zu nehmen, wie bspw. aus der DE102004050597 ersichtlich.

Jedes der bekannten Systeme zur Vermeidung von Wildunfällen weist - wie oben bereits angesprochen - erhebliche Nachteile auf. So lassen die meisten dieser Systeme nicht erkennen, ob das detektierte Tier allein unterwegs ist oder ob noch Folgetiere aus demselben Rudel nachfolgen. Darüber hinaus erkennt ein Autofahrer bei kurvigen oder hügeligen Strassen die Warnsignale häufig zu spät, d.h. nähert sich der Autofahrer der Gefahrenzone zu schnell und mit fatalen Folgen, weil die Reaktionszeit der Tiere länger ist als der Bremsweg des Fahrzeuges. In der Regel werden Kleintiere von diesen Systemen nicht erfasst und können sich diese Kleintiere unerkannt unter dem Detektionskegel frei bewegen.
Die meisten dieser Systeme sind an den Leitpfosten befestigt und sind nicht allen Umwelt- und Strassenbedingungen über längere Zeit gewachsen, d.h. sind nicht strassentauglich. So sind Beschädigungen an den Leitpfosten an der Tagesordnung, sei es durch Schleudersteine, Schleuderunfälle oder Räumfahrzeuge, mit welchen die Leitpfosten beschädigt werden, d.h. diese mindestens aus ihrer ursprünglich vertikalen Position in eine Schräglage gebracht werden. Eine Inklination dieser tragenden Strukturen führt bspw. dazu, dass die daran angebrachten Wildwarnsysteme, insbesondere deren Reflektoren, zur Fahrbahn geneigt liegen und damit nicht mehr die vorgesehene Rückstrahl-Effizient aufweisen. Ebenso verändert sich dabei die Lage der Detektionskegel und verringert sich damit auch der vom System ursprünglich überwachte Bereich. Die Übertragungsleistung, resp. Reichweite von Senderkomponenten wird durch die Richtungsänderung der abgestrahlten Kommunikationsdaten stark beeinträchtigt. In manchen Fällen gehen diese Systeme sogar ganz verloren oder werden diese entwendet.

Es ist deshalb Aufgabe der vorliegenden Erfindung ein Verfahren und eine Vorrichtung zu schaffen, welche die genannten Nachteile überwinden. Insbesondere soll ein Verfahren zur Vermeidung von Wildunfällen mittels einer Warnvorrichtung sowie eine Warnvorrichtung dazu geschaffen werden, welche strassentauglich ist, d.h. unabhängig von der Inklination der tragenden Leitpfosten die Rückstrahl-Effizienz und/oder Abstrahl-Charakteristik eines Signalgebers und/oder eines Erkennungssensors und/oder eines Kommunikations-Systems optimierbar ist und unerwünschte und/oder irrtümliche Warnsignale vermeidet.

Diese Aufgabe wird erfindungsgemäss in überraschend einfacher Weise mit einem Verfahren nach Anspruch 1 und einer Warnvorrichtung nach Anspruch 3 gelöst. Das erfindungsgemässe Verfahren zur Vermeidung von Wildunfällen, mittels einer an einer tragenden Struktur, bspw. einem Leitpfosten, befestigte Warnvorrichtung - im Folgenden auch Wildwarner genannt - sieht vor, dass die elektronischen Komponenten dieser Warnvorrichtung von einer autonomen Stromversorgung, insbesondere einem Akku und einem Solarmodul mit Strom versehen werden. Damit kann gewährleistet werden, dass eine Strasse und deren Umgebung mittels spezifischer Erkennungssensoren dieser Warnvorrichtung permanent überwacht wird, um die Anwesenheit und/oder die Art und/oder die Bewegungsrichtung und/oder die Position eines Fahrzeugs und/oder eines Fahrbahnhindernisses (Wild, Menschen, Gesteinsbrocken, verlorenes Transportgut, etc.) zu detektieren. In bekannter Weise wird bei Annäherung eines Fahrzeuges von einer Auswerte-/Steuer-Elektronik der Warnvorrichtung ein elektrisches Signal generiert, mit welchem ein Signalgeber aktiviert wird, um Menschen (auf der Fahrbahn und/oder im herannahenden Fahrzeug) zu warnen.

Moderne Warnvorrichtungen können mit einem sich nähernden Fahrzeug kommunizieren und/oder direkt in deren Elektronik eingreifen, bspw. deren Fahrgeschwindigkeit reduzieren oder bordeigene Kommunikationssysteme aktivieren. Leider erweisen sich diese Einrichtungen als unzuverlässig, d.h. weisen eine hohe Falschalarmquote auf, d.h. sind unzuverlässig und nicht strassentauglich.

Ein erster erfindungswesentlicher Aspekt des vorliegende Verfahren und der dazugehörigen Warnvorrichtung besteht deshalb darin, die Warnvorrichtung unabhängig von der Inklination der tragenden Struktur mittels einer bewegbaren Halterung in gewünschter Weise ausrichtbar zu gestalten. Damit kann die Rückstrahl-Effizienz und/oder Abstrahl-Charakteristik des Signalgebers und/oder des Erkennungssensors und/oder eines Kommunikations-Systems in einfacher Weise optimiert werden. In einer bevorzugten Ausführungsform dieses Verfahrens wird die Warnvorrichtung mittels Lagesensoren und/oder einer Kommunikationseinheit automatisch ausgerichtet.

Darüber hinaus weist die vorliegende Warnvorrichtung eine Sensor-Logik auf, die ein weites Erfassungsfeld erzeugt, d.h. einen Erfassungswinkel von über 160°, vorzugsweise 180° aufweist. Damit wird nicht nur die Erfassungszuverlässigkeit erhöht, sondern wird auch eine allfällige Reduktion des Erfassungsfeldes durch eine unvorhergesehene Inklination der tragenden Struktur vermieden.

Die erfindungsgemässe Warnvorrichtung umfasst mindestens eine autonome Stromversorgung, insbesondere einen Akku und ein Solarmodul, sowie einen Erkennungssensor, eine Auswerte-/Steuer-Elektronik und einen Signalgeber. Erfindungsgemäss weist diese Warnvorrichtung eine Halterung auf, mit welcher diese Warnvorrichtung an einer tragenden Struktur in Strassennähe, insbesondere an einem Strassenleitpfahl und/oder an einem Felsen, unabhängig von der Inklination der tragenden Struktur, in gewünschter Weise ausrichtbar und befestigbar ist.

In einer bevorzugten Ausführungsform weist die erfindungsgemässe Halterung ein Sockelelement und eine daran beweglich befestigte Halteklammer auf. Vorzugsweise ist die Halteklammer über ein Kugelgelenk mit dem Sockelelement verbunden und lässt sich dieses Kugelgelenk nach gewünschter Ausrichtung des Gehäuses mechanisch und/oder elektromagnetisch fixieren, derart dass sich die Halteklammer und das Sockelteil im montierten Zustand und gewünschter Ausrichtung nicht in unerwünschter Weise verstellen, trennen oder entfernen lassen.
Es versteht sich, dass dieser Halterungs-Aufbau durch einen anderen mechanischen Aufbau mit derselben Wirkung ersetzt sein kann, bspw. in Form von mehreren gestapelten Keilelementen, die sich gegeneinander verdrehen und arretieren lassen.

Im Gehäuse der Detektionseinheit sind alle wesentlichen elektronischen Komponenten untergebracht, insbesondere mindestens ein Sensor in Form eines Bewegungsmelders und/oder eines IR-Sensors und/oder zur Geräuscherkennung, etc.. In einer bevorzugten Ausführungsform werden drei passiv Infrarot-Sensoren (PIR-Sensoren) für die Erfassung von Wild verwendet, um ein erstes, der Strasse abgewandtes, Erfassungsfeld zu erzeugen, welches einen Erfassungswinkel von über 160°, vorzugsweise 180° aufweist. Hilfsweise können an der Detektionseinheit Abdeckungen befestigt werden, um das Erfassungsfeld für die Erfassung von Wild der besonderen Umgebungssituation in einfacher Weise anzupassen.
Darüber hinaus werden bei dieser Ausführungsform zwei weitere PIR-Sensoren verwendet, um strassenseitig ein zweites und drittes Erfassungsfeld zu erzeugen. Selbstverständlich sind dem Fachmann auf diesem Gebiet verschiedene andere Formen von Sensoren für die Erkennung von Wild, Hindernissen oder Fahrzeugen bekannt.

In einer weiterführenden Ausführungsform des erfindungsgemässen Wildwarners ist die Auswerte-/Steuer-Elektronik mit weiteren Warnvorrichtungen und/oder externen Datenverarbeitungssystemen vernetzt, um bspw. die gewünschte Ausrichtung der Detektoren und/oder Reflektoren zu kalibrieren, d.h. eine ungewünschte Veränderung und/oder Entfernung der Warnvorrichtung überprüfbar und korrigierbar zu machen und/oder um irrtümliche Warnsignale zu vermeiden. Diese Vernetzung erlaubt insbesondere eine gewünschte Optimierung der Rückstrahl-Effizienz und/oder der Abstrahl-Charakteristik des Signalgebers und/oder der Erkennungssensoren und/oder des Kommunikations-Systems selbst automatisch und/oder über externe Rechner einzustellen und erzeugte Warnsignale zu überprüfen, zu speichern und auszuwerten. Diese Vernetzung ermöglicht es optische Warnsignale und/oder Funksignale für sich annähernde Fahrzeuge vor unübersichtlichen Kuppen und/oder Kurven fehlerfrei auszulösen, d.h. irrtümliche Warnsignale zu verhindern.

Durch die Verwendung von strassenseiten-abhängigen Funkfrequenzen kann die Falschalarmquote zusätzlich weiter reduziert werden, insbesondere weil damit die von den jeweilige Warnvorrichtung erzeugten Funksignale einer spezifischen Strassenseite klar zugeordnet werden können.

Die Vorteile der vorliegenden Erfindung sind dem Fachmann unmittelbar ersichtlich und insbesondere in der einfachen Montage, dem wartungsarmen Unterhalt und der erweiterbaren Funktionsfähigkeit durch die elektronische Vernetzung, bspw. für die selbsttätige und/oder computergesteuerte Einstellbarkeit, für die Reduzierung der irrtümlich erzeugten Warnsignalen sowie für deren Verwendung im Zusammenhang mit autonomen Fahrzeugen zu sehen. Die Einstellbarkeit und Optimierbarkeit der Erfassungs- und Signalbereiche macht diesen Wildwarner nicht nur strassentauglich, sondern erhöht auch die Sicherheit im Strassenverkehr in hohem Masse. Als besonders vorteilhaft sind die regenerative Energieversorgung und ein in einfacher Weise zu bewerkstelligenden elektro-mechanischen und/oder elektronischen Diebstahlschutz bekannter Art zu sehen.

Darüber hinaus erlaubt die vorliegende Erfindung die elektronischen Komponenten in einfacher Weise mit weiteren elektronischen Schaltungen zu ergänzen, insbesondere um Daten zum realen Wildwechsel (Wanderverhalten, Reaktionsverhalten, etc.) aufzuzeichnen, welche der Jägerschaft, dem öffentlichen Dienst (Strassenamt) und/oder der Polizei zur Verfügung gestellt werden können.

Im Folgenden soll die Erfindung anhand eines Ausführungsbeispiels und mit Hilfe der Figuren näher erläutert werden. Dabei zeigt:
- Fig. 1:: Schematische Darstellung zur Verwendung eines erfindungsgemässen Wildwarners;
- Fig. 2a,b:: schematische Darstellungen einer räumlichen Vorder- und Rückansicht eines erfindungsgemässen Wildwarners;
- Fig. 3:: schematische Darstellung zum prinzipiellen Aufbau eines erfindungsgemässen Wildwarners im Längsschnitt;
- Fig. 4a,b:: schematische Darstellungen zum prinzipiellen Aufbau einer Halterung für die Winkeleinstellung eines erfindungsgemässen Wildwarners;
- Fig. 5:: Blockdiagramm zur elektronischen Schaltung eines erfindungsgemässen Wildwarners;
- Fig. 6:: schematische Darstellung zur Anordnung von PIR-Sensoren innerhalb der Detektionseinheit eines erfindungsgemässen Wildwarners;
- Fig. 7:: schematische Darstellung zu den Erfassungsfeldern der Detektionseinheit eines erfindungsgemässen Wildwarners;
- Fig.8:: Flussdiagramm zur Funktionsweise eines erfindungsgemässen Wildwarners.

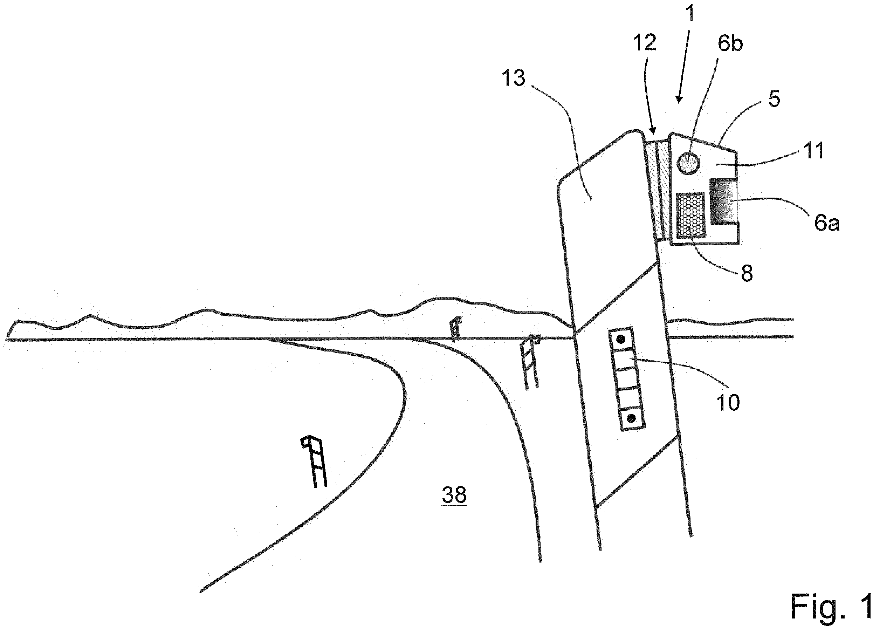

Fig. 1 macht die Verwendung und das Design einer erfindungsgemässen Warnvorrichtung 1 deutlich. Für die Verwendung dieser Warnvorrichtung 1 ist diese an einer tragenden Struktur 13, insbesondere an einem Leitpfosten zur Markierung des Strassenrandes, befestigt. Es versteht sich, dass die erfindungsgemässe Warnvorrichtung 1 an der dem Strassenverlauf abgewandten Seite der tragenden Struktur 13 befestigt ist, um das sich nähernde Wild möglichst frühzeitig erkennen zu können. Dazu weist diese Warnvorrichtung 1 eine Gehäuse-Baugruppe 11 auf, welche elektronische Komponenten 2 umfasst, welche nachfolgend näher erläutert werden. Ein Signalgeber 8 erzeugt ein von der Strasse aus gut sichtbares Blinklicht, um herannahende Fahrzeuge vor einer Kollision mit dem Wild zu warnen. der anfahrende Verkehr mit Hilfe von Sensoren 6b erfasst. Eine auf der Oberseite der Warnvorrichtung 1 angeordnetes Solarmodul 5 versorgt eine im Gehäuse 11 geschützte Elektronik 2, insbesondere eine Wild-Erkennungseinheit 6a, Erkennungseinheiten 6b, 6c für den anfahrenden und weiterfahrenden Verkehr sowie weitere Elektronik-Komponenten. Wesentlich für den vorliegenden Wildwarner 1 ist eine Halterungs-Baugruppe 12, mit welcher die Gehäuse-Baugruppe 11 mit der Detektionseinheit 6 relativ zur tragenden Struktur 13 räumlich verstellt werden kann.

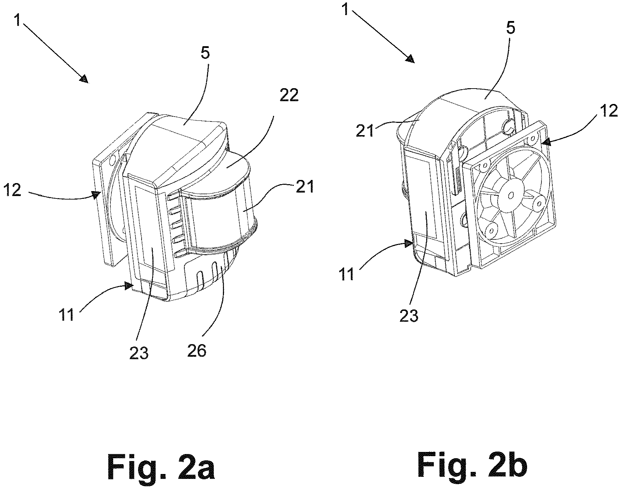

Figuren 2a und 2b zeigen eine räumliche Vorder- und Rückansicht einer ersten Ausführungsform der vorliegenden Warnvorrichtung 1, im Folgenden auch Wildwarner genannt. Dieser Wildwarner umfasst mehrere Baugruppen, nämlich eine Gehäuse-Baugruppe 11 für die Aufnahme der elektronischen Komponenten 2 und eine Halterungs-Baugruppe 12 für die Befestigung der Gehäuse-Baugruppe 11 an einer tragenden Struktur 13, bspw. ein Leitpfosten oder Felsvorsprung. Die Gehäuse-Baugruppe 11 umfasst ein Fresnel-Linsensystem für mindestens einen pyroelektrischen Infrarot-Sensor, allgemein auch als PIR-Sensor oder PIR-Linse 21 bekannt, welche in eine stabile Abdeckung 22 eingepasst ist. Mit solchen PIR-Linsen 21 lässt sich der räumliche Wirkungsbereich des Sensors bestimmen und auf die jeweilige Anwendung anpassen. Es versteht sich, dass das Erfassungsfeld dieser PIR-Linsen 21 mit Hilfe einer Blende oder einem anderen optischen Bauteil angepasst werden kann, d.h. der lokal bestehenden Umweltsituation entsprechend präziser eingestellt werden kann. Insbesondere kann mit diesem Linsensystem bei Verwendung mit mehreren PIR-Sensoren die räumliche Auffächerung der Empfindlichkeitsbereiche für die Detektion von Wärmequellen wesentlich verbessert werden. Im Seitenbereich der Gehäuse-Baugruppe 11 sind jeweils LED-Leuchten 23 angeordnet. Auf der Oberseite der Gehäuse-Baugruppe 11 ist mindestens ein Solarmodul 5 vorgesehen. Auf der Unterseite der Gehäuse-Baugruppe 11 ist ein BatterieFach vorgesehen, in welchem eine aufladbare Batterie (Akku) in einfacher Weise einsetzbar ist und von einer Batterie-Abdeckung 26 geschützt ist. Diese Gehäuse-Baugruppe 11 ist an einer Halterungs-Baugruppe 12 befestigt, deren Funktionsweise im Folgenden näher erläutert wird.

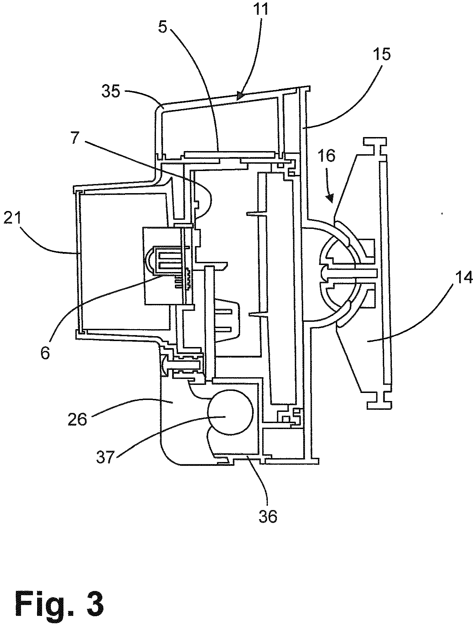

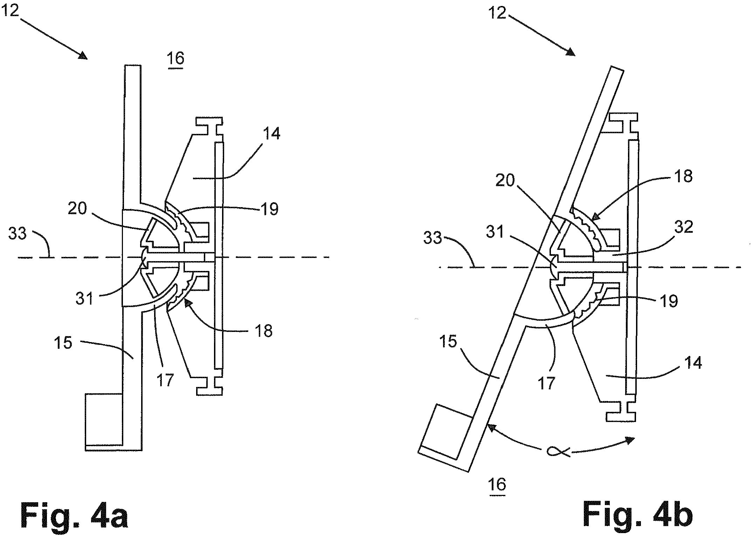

Der in Fig. 3 dargestellte Querschnitt zeigt den prinzipielle Aufbau eines erfindungsgemässen Wildwarners 1. So ist das Sockelelement 14, die daran einstellbar befestigte Halteklammer 15 und die an dieser Halteklammer 15 befestigte Gehäuse-Baugruppe 11 erkennbar. Die Kugelgelenk-Anordnung 16 zwischen dem Sockelelement 14 und der Halteklammer 15 sowie deren mechanische Funktionsweise soll mit Hilfe der Fig. 4a und 4b näher erläutert werden. Die dargestellte Gehäuse-Baugruppe 11 umfasst ein Gehäuseteil 35, welches sich in einfacher Weise mit der Halteklammer 15 verbinden lässt, vorzugsweise über eine Einschiebe- und Schraubmechanik. In diesem Gehäuseteil 35 sind die elektronischen Komponenten 2, insbesondere die Auswertelektronik 7 und mindestens ein Erkennungssensor 6 untergebracht. Für die Stromversorgung der elektronischen Komponenten 2 ist ein in einem separaten Batteriefach 36 liegender Akku 37 vorgesehen. Dieser Akku 37 - auch in Form einer Powerbank - wird von mindestens einem im oberen Gehäuseteil 35 angeordneten Solarmodul 5 geladen. Im Frontbereich dieses Gehäuseteils 35 ist eine zylindrisch gewölbte PIR-Linse 21 (Fresnel-Linse) angeordnet, welche den Erkennungssensor 6 umschliesst.

In einer bevorzugten Ausführungsform der vorliegenden Warnvorrichtung 1 weist diese eine wetterabhängige Erfassungsreichweite von ca. 27m auf, bei einem Detektionswinkel von über 160°. Die LED-Leuchte weist zwei Reihen mit je fünf oder 8 LED-Dioden auf, welche Licht mit einer Wellenlänge im sichtbaren Bereich (380-780nm), insbesondere von 600nm bis 630nm (oranges Licht), emittieren. Diese Wellenlängen liegen ausserhalb der vom Erkennungssensor 6 detektierten IR-Strahlung im Bereich von 850nm bis 950nm. Das mindestens eine Solarmodul 5 erzeugt eine elektrische Spannung von bspw. 5.5V und erzeugt Strom von 60mA bei ca. 100'000Lux (Sonnenschein). Es liegt nahe, zusätzliche Solarmodule 5 einzusetzen, um eine bessere Lade-Effizienz zu erreichen. In einer Weiterbildung der beispielhaft beschriebenen Warnvorrichtung werden mehrere, bspw. in Form eines Giebeldaches, gegeneinander geneigte Solarzellen verwendet. Als Akku werden wiederaufladbare Lithium Batterien mit einer Spannung von 3.6V Gleichstrom, mit einer Betriebszeit von mehr als 30 Tagen und einer Ladezeit von ca. 48h verwendet.

Es versteht sich, dass die technische Auslegung der Stromversorgung dem Stromverbrauch der verwendeten elektronischen Bauteile angepasst ist, d.h. auch ein oder mehrere Akkus mit einer Nennkapazität von 3'000mAh bis 3'400mAh verwendet werden, wie sie bspw. von heutigen 18650 Li-Ion Batterien bekannt sind. Ebenso kann für das Wiederaufladen dieser Akkus ein USB-C Port vorgesehen werden. Ein solcher USB-C Port sollte zugänglich sein ohne das Gehäuse 11 der Warnvorrichtung 1 von seiner tragenden Struktur 13 entfernen zu müssen. Vorteilhafterweise ist dieser UBS-C Port ausgelegt, um die Batterien (falls vorhanden) aufladen zu können, um gespeicherte Daten auslesen zu können und/oder um die Auswerte- und Steuerelektronik 7 umprogrammieren zu können.
Die weiteren Komponenten sind so ausgelegt, dass diese im Bereich von -40°C bis 60°C temperaturbeständig arbeiten. Es versteht sich, dass die gesamte Gehäuse-Baugruppe staub- und spritzwassergeschützt ist, d.h. insbesondere die Schutzklasse IP65 erfüllt. Ein vernetztes Kommunikationssystem mit einer Kommunikations-, resp. Datenübertragungseinheit weist mindestens eine Übertragungsfrequenz (RF) von 2.4GHz auf und hat eine Sende- und Empfangsreichweite von bis zu 50m.

Die in Fig. 4a und 4b dargestellten Querschnitte des erfindungsgemässen Wildwarners 1 machen die mechanische Funktionsweise der Kugelgelenk-Anordnung 16 besonders deutlich. Insbesondere weist die Halteklammer 15 der Kugelgelenk-Anordnung 16 eine Kugelkalotte 17 auf, welche in eine komplementär geformte Kugelpfanne 18 des Sockelelementes 14 ragt. Zwischen der Kugelpfanne 18 und der Kugelkalotte 17 ist ein Verriegelungselement 19 vorgesehen, welches unter Spannung die Kugelkalotte 17 und die Kugelpfanne 18 miteinander kraftschlüssig verbindet. Für die Erzeugung der erforderlichen Druckspannung ist ein Spannelement 20 vorgesehen, welches mit Hilfe einer in eine Hülsenmutter 32 des Sockelelementes 14 einschraubbare Schraube 31 festgespannt wird. Fig. 4a zeigt die Halterungs-Baugruppe 12 in einer losen, d.h. verstellbaren und noch nicht verspannten Stellung, während Fig. 4b die Halterungs-Baugruppe 12 in einer zur Zentralachse 33 geneigten und fixierten Stellung zeigt. Es versteht sich, dass in der unverspannten Stellung gemäss Fig. 4a der Stellwinkel α zwischen der Halteklammer 15 und dem Sockelelement 14 frei gewählt werden kann und die Halteklammer 15 um die Zentralachse 33 gedreht werden kann, um die Halteklammer 15 und die damit fest verbundene Gehäuse-Baugruppe 11 in gewünschter Weise zu verschwenken und in dieser Position zu fixieren.

In einer weiteren Ausführungsform dieser Halterungs-Baugruppe 12 besteht diese aus einem Sockelelement, auf welchem mindestens ein keilförmig ausgebildetes Element drehbar gelagert ist, derart dass durch eine Verdrehung der keilförmigen Elemente relativ zueinander die Lage der Detektionseinheit 6 einstellbar ist. Dieses Prinzip ist aus der DE102006002576 (dessen Lehre hier vollumfänglich eingeschlossen sein soll) bekannt und braucht deshalb hier nicht weiter erläutert zu werden.

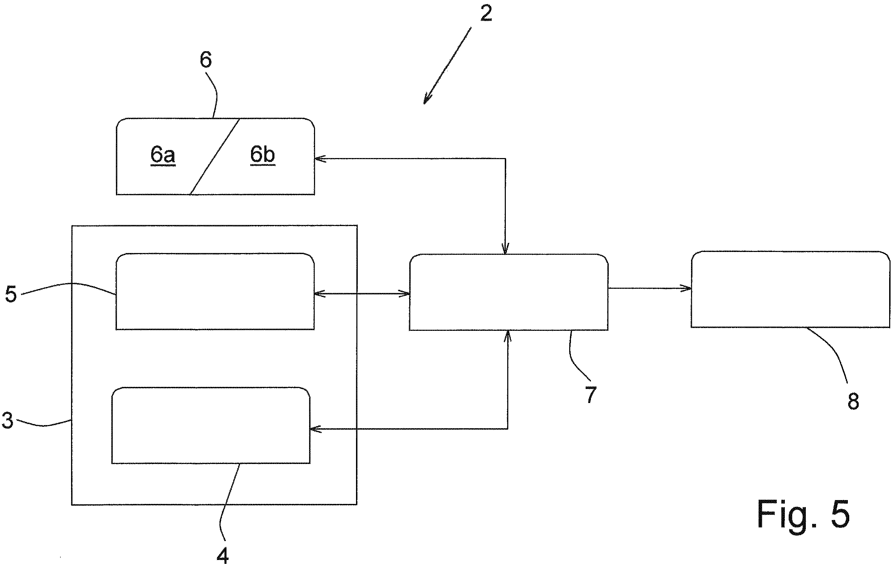

Das in Fig. 5 dargestellte Blockdiagramm zeigt die elektronische Schaltung des erfindungsgemässen Wildwarners 1 mit seinen elektronischen Komponenten 2. Eine autonome Stromversorgung 3 umfasst mindestens ein Solarmodul 5 und einen Akku 4, welche mit einer Auswerte-/Steuer-Elektronik 7 elektrisch verbunden sind und diese mit elektrischem Strom versorgen. Die Auswerte- und Steuer-Elektronik 7 ist eingerichtet, um weitere elektronische Komponenten 2 mit der erforderlichen elektrischen Energie zu versehen, insbesondere eine Detektionseinheit 6, welche eine Wild-Erkennungseinheit 6a und eine Verkehrs-Erkennungseinheit 6b umfasst und mit welchen eine Strasse und deren Umgebung überwachbar ist, d.h. die Anwesenheit und/oder die Art und/oder Bewegungsrichtung und/oder Position von Wild, Fahrzeugen oder anderen möglichen Verkehrshindernissen (Menschen, Gesteinsbrocken, verlorenes Transportgut, etc.) detektiert wird. Die von dieser Detektionseinheit 6 erzeugten elektronischen Signale werden von der Auswerte-/Steuer-Elektronik 7 weiterverarbeitet, insbesondere um bei Annäherung eines Fahrzeuges ein elektrisches Signal zu generieren, mit welchem im Gefahrenfall ein Signalgeber 8 aktiviert wird. Auch dieser Signalgeber 8 wird von der autonomen Stromversorgung 3, einfacherweise über die Auswerte-/Steuer-Elektronik 7, mit der erforderlichen elektrischen Energie versorgt. Der Signalgeber 8 ist vorzugsweise als optischer Signalgeber ausgebildet, um Menschen (auf der Fahrbahn und/oder im Fahrzeug) zu warnen. In weiterführenden Ausführungsformen ist dieser Signalgeber 8 geeignet, um mit einem sich nähernden Fahrzeug direkt zu kommunizieren und/oder dieses zu steuern und/oder zu regeln, bspw. abzubremsen. Erfindungsgemäss lässt sich die vorliegende Warnvorrichtung 1 unabhängig von der Inklination der tragenden Struktur, bspw. ein Leitpfosten, mittels einer einstellbaren, vorzugsweise gelenkigen Halterung in gewünschter Weise ausrichten. Die gewünschte Ausrichtung wird einfacherweise manuell eingestellt. In einer besonderen Weiterbildung ist die Auswerte-/Steuer-Elektronik 7 mit Lagesensoren und/oder einer Kommunikationseinheit zur Optimierung der Rückstrahl-Effizienz, resp. der Abstrahl-Charakteristik des Signalgebers und/oder des Erkennungssensors und/oder eines Kommunikations-Systems gekoppelt, insbesondere um die Warnvorrichtung 1 automatisiert auszurichten und die Funktionsfähgkeit zu optimieren.
In einer Weiterbildung dieses Wildwarners 1 ist dessen Kommunikations-, resp. Datenübertragungseinheit mit den Kommunikations-, resp. Datenübertragungseinheiten benachbarter Warnvorrichtungen W1, W2, W3 vernetzt, um ein Kommunikationssystem, insbesondere ein Funknetz zu bilden. Vorteilhafterweise weist dieses Kommunikationssystem unterschiedliche und insbesondere strassenseitenabhängige Funkfrequenzen auf.
So kann mit der Datenübertragungseinheit, insbesondere an unübersichtlichen Stellen, auch ein intelligentes Strassennetz (road-to-car communication / road network) aufgebaut werden oder kann damit im Gefahrenbereich selektiv die Strassenbeleuchtung aktiviert werden oder können die einzelnen Wildwarner ferngesteuert ausgerichtet werden oder sich gegenseitig automatisch ausrichten.

Für eine allfällig gewünschte Datenspeicherung lassen sich die vorliegenden Wildwarner weiter ausrüsten, bspw. um diese mit elektronischen Systemen der Polizei und/oder dem zuständigen Wildhüter zu vernetzen, insbesondere um die erfassten Daten zur Verkehrssituation (Verkehrsdichte, Verkehrsfluss, Stau, etc.), insbesondere im Zusammenhang mit einem Unfallort, der Unfallzeit und/oder zu allfällig detektierten Bildern, etc. zu übertragen. Eine solche Datenspeicherung kann für die Erfassung und Aufzeichnung von Wildwechseln genutzt werden, insbesondere für die Erstellung von Statistiken.

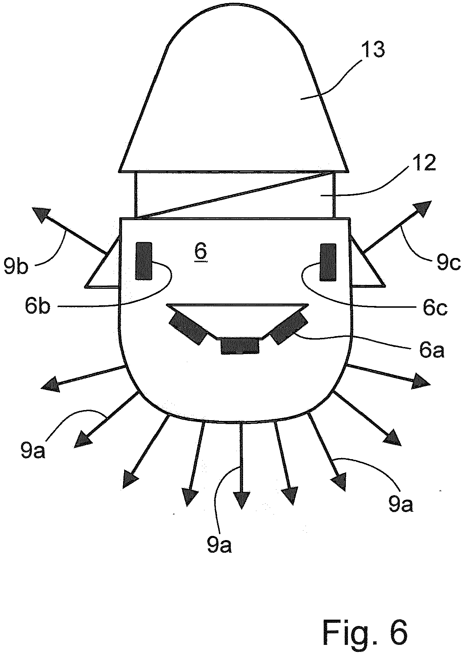

Die in Fig. 6 gezeigte schematische Querschnittsdarstellung einer beispielhaften Anordnung von pyroelektrischen Infrarot-Sensoren (PIR-Sensoren) 6a, 6b innerhalb der Detektionseinheit 6 eines erfindungsgemässen Wildwarners. Im gezeigten Ausführungsbeispiel sind drei PIR-Sensoren 6a für die Detektion von Wild oder anderen potentiellen Gefahrenquellen aus der unmittelbaren Strassenumgebung vorgesehen. Mit dieser mehrteiligen Anordnung lässt sich die Gesamtsensitivität erhöhen, resp. können weniger empfindliche Sensoren verwendet werden, um das gewünschte Erfassungsfeld mit mindestens 27m Reichweitentiefe und einem Erfassungswinkel von 160° abzudecken. Um Falschalarme reduzieren zu können, sind zwei strassenseitige PIR-Sensoren 6b, 6c vorgesehen, deren Detektions-Hauptrichtungen einerseits in die Richtung 9b des heranfahrenden Verkehrs und andererseits in die Richtung 9c des sich entfernenden Verkehrs weisen. Die Erfassungsdaten dieser Sensoren erlauben es die Geschwindigkeit des sich annähernden Fahrzeugs zu ermitteln und den Signalgeber 8 für eine errechnete Zeit zu unterbrechen - falls kein Wild detektiert wurde - um damit einen möglichen Falschalarm in dieser errechneten Zeit zu verhindern. Diese beiden Sensoren 6b, 6c sind auch erforderlich um zu verhindern, dass ein auf der überwachten Fahrspur entgegen der ordentlichen Fahrtrichtung A fahrendes Fahrzeug (beim Überholen) einen Falschalarm auslöst und die Detektionseinheit 6 dieses Fahrzeug als ein in der überwachten Spur für die Fahrtrichtung A vorausliegendes Hindernis interpretiert. Diese Anordnung erlaubt es der Auswerte-/Steuer-Elektronik 7 obige besondere Situation (Überholvorgang) zu erkennen und einen Falschalarm zu unterdrücken. Wesentlich für den vorliegenden Wildwarner ist die Halterungs-Baugruppe 12 zwischen der Detektionseinheit 6 und der tragenden Struktur 13. Erfindungsgemäss erlaubt diese Halterungs-Baugruppe 12 die Detektionseinheit 6 räumlich zu bewegen, d.h. die Detektionsrichtungen 9a, 9b, 9c für die Detektion und die Funk-Kommunikation zwischen benachbart und/oder gegenüberliegenden liegenden Warnvorrichtungen W1, W2, W3 zu optimieren. In der dargestellten Ausführungsform ist die Halterungs-Baugruppe 12 durch zwei keilförmige und zueinander verdrehbare Elemente verwirklicht, wie bereits weiter oben näher erläutert. Es versteht sich, dass diese Halterungs-Baugruppe 12 durch andere analog wirkende Konstruktionen ersetzt sein kann.

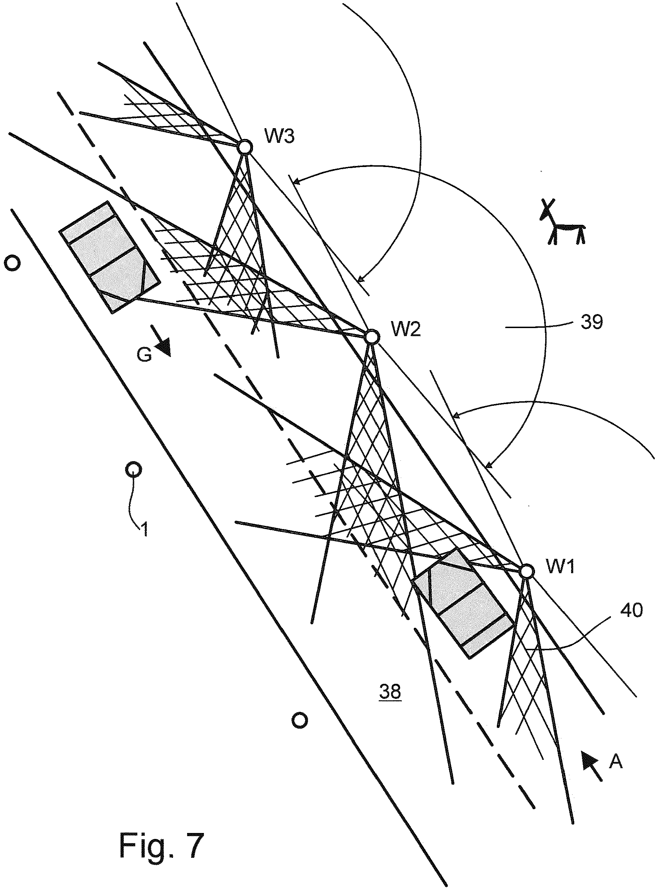

Fig. 7 macht beispielhaft die Funktionsweise der vorliegenden Erfindung deutlich. Dabei sind an den Leitpfosten 13 entlang einer Strasse 38 erfindungsgemässe Warnvorrichtungen 1, W1, W2, W3 befestigt, deren Wild-Erkennungseinheit 6a, die der Strasse abgewandte Umgebung (Feld, Wiese, Wald, etc.) erfasst. Der Erfassungswinkel des überwachten Bereichs (Wild-Erfassungsbereich) beträgt in der Regel 160° und hat eine Reichweite von sicher 27m. Strassenseitig werden je zwei Erfassungsbereiche (Fahrzeug-Erfassungsbereiche) erzeugt - einmal in Richtung des anfahrenden Verkehrs und einmal in Richtung des wegfahrenden Verkehrs. Dabei werden von der Warnvorrichtung unterschiedliche Situationen erkannt. Beispielsweise Situation A), bei welcher der Wildwarner W2 eine Wärmequelle im Strassen-Aussenbereich detektiert und ein Funksignal an Wildwarner W1 sendet, und falls i) Wildwarner W1 eine Wärmequelle im Strassenbereich vor Empfang des Funksignals von Wildwarner W2 detektiert, sowohl bei Wildwarner W1 als auch bei Wildwarner W2 ein Blinklicht ausgelöst wird; und falls ii) Wildwarner W1 eine Wärmequelle im Strassenbereich nach Empfang des Funksignals von Wildwarner W2 detektiert kein Blinklicht bei Wildwarner W1 ausgelöst wird, jedoch ein Blinklicht bei Wildwarner W2 ausgelöst wird. Situation B), bei welcher der Wildwarner W2 keine Wärmequelle im Strassenbereich detektiert, jedoch i) der Wildwarner W1 eine Wärmequelle (Fahrzeug) detektiert und ein Funksignal sendet; und falls i) der Wildwarner W2 eine Wärmequelle im Umgebungsbereich detektiert, ein Blinklicht bei Wildwarner W2 ausgelöst wird; und falls ii) der Wildwarner W2 keine Wärmequelle im Umgebungsbereich detektiert, bei Wildwarner W2 kein Blinklicht ausgelöst wird. Es versteht sich, dass die Auswerte-/Steuer-Elektronik 7 in gewünschter Weise weiter programmierbar ist.

Um den Gegenverkehr vom sich nähernden, resp. vom sich entfernenden Verkehr unterscheiden zu können, werden für jede Strassenseite von den dort montierten Wildwarnern unterschiedliche Funkfrequenzen verwendet.

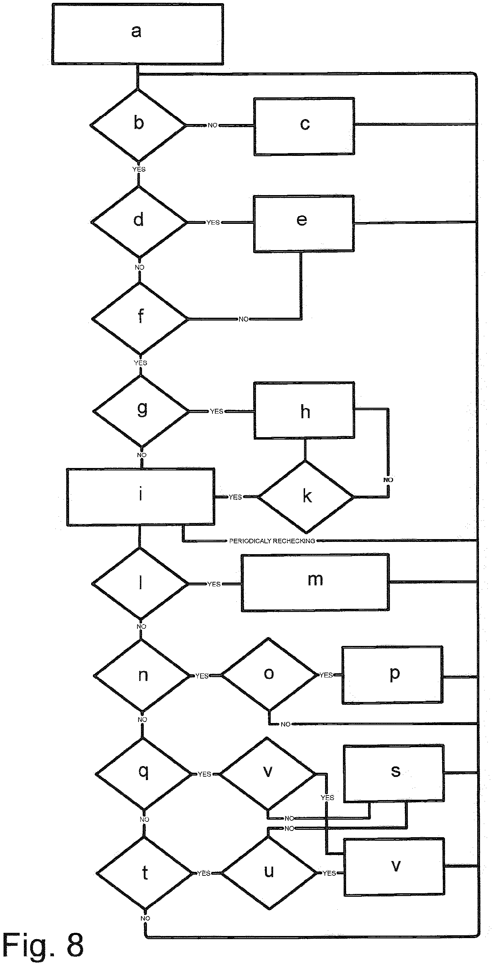

Die Funktionsweise des erfindungsgemässen Verfahrens soll anhand eines Ausführungsbeispiels und mit Hilfe des in Fig. 8 dargestellten Flussdiagramm deutlich gemacht werden. Dabei wird in einem ersten Schritt a) ein erfindungsgemässer Wildwarner 1 installiert, d.h. wird dieser an einer tragenden Struktur (Strassenleitpfahl) 13 befestigt, optimal ausgerichtet und eingestellt, d.h. werden Stromquellen (Batterien, Akkus) eingesetzt, und DIP-Schalter wie gewünscht geschaltet (bspw. für den Blau- oder Grün-Modus der LED-Anzeigen), um ein RF-Signal mit bestimmter Frequenz zu wählen und entsprechend einoder auszuschalten, um die Zeitverzögerung (von 3, 4, 5 oder 6 sec) für das Ausschliessen von Falschalarmen zu wählen, um die optimale Funktionstemperatur (40°C, 50°C, 60°C) der Einheit zu wählen oder eine gewünschte Beleuchtungsstärke (100, 200, 400 Lux ) für die Detektion von Wärmequellen mit hoher Temperatur einzustellen. Im nächsten Schritt b) wird der Ladezustand der Stromversorgungselemente automatisch überprüft. Falls sich dieser als ungenügend erweist wird in Schritt c) die Detektionseinheit automatisch in ihren Standby-Modus geschaltet, die PIR-Sensoren und RF-Sender ausgeschaltet, die Aufladung mittels des Solarmoduls 5 aktiviert und eine rot blinkende LED eingeschaltet. Nach Aufladung wird Schritt b) wieder ausgeführt. Diese Schleife b) - c) - b) wird solange ausgeführt bis der Ladezustand der Stromversorgungseinheit als genügend beurteilt wird. In einem Folgeschritt d) wird die Beleuchtungsstärke im Detektionsbereich geprüft. Falls diese oberhalb 1'200 Lux liegt, wird Schritt e) aktiviert, d.h. wird die Einheit in den Standby-Modus geschaltet, werden die PIR-Sensoren ausgeschaltet, laden die Solarpanel den Akku, leuchtet die LED-Anzeige (je nach DIP-Schalterstellung: grün oder blau) und wird Schritt b) aktiviert. Liegt die Beleuchtungsstärke unterhalb 1'200 Lux wird Schritt f) ausgeführt, mit welchem geprüft wird, ob in den letzten fünf Minuten ein Fahrzeug die Detektionseinheit passiert hat. Falls nicht, wird Schritt e) aktiviert. Wurde in dieser Zeit ein Fahrzeug detektiert wird Schritt g) ausgeführt, d.h. wird die Temperatur des PCB (Printed Circuit Board) um 19h, 20h, 21h geprüft und festgestellt. ob die Temperatur des PCB oberhalb der mit den DIP-Schaltern eingestellten Temperatur liegt. In diesem Fall wird Schritt h) aktiviert, mit welchem die Einheit in den Standby-Modus geschaltet wird, die PIR-Sensoren ausgeschaltet werden, die Solarpanel den Akku laden, die LED-Anzeige (je nach DIP-Schalterstellung: grün oder blau) aufleuchtet, bis das Licht unterhalb der mit den DIP-Schaltern eingestellten Beleuchtungsstärke liegt. Erst dann wird Schritt i) aktiviert. Andernfalls wird Schritt h) wieder ausgeführt. Liegt die mit Schritt g) festgestellt Temperatur des PCB unterhalb der eingestellten Temperatur wird Schritt i) ausgeführt, d.h. wird die Warnvorrichtung in den Working-Modus geschaltet, überprüfen die Erkennungseinheiten den rollenden Verkehr und die Präsenz von Wild, laden die Solarpanel - wenn genügend Licht vorhanden ist - und werden die RF-Signale geprüft. Dieser Working-Modus wird periodisch überprüft, d.h. wird Schritt b) periodisch wieder aktiviert. Wird in diesem Modus unter Schritt I) Wild beobachtet, wird Schritt m) aktiviert, d.h. werden die verkehrsseitigen Warnblinker für 30sec mit einer Leuchtkraft von 400 Lux aktiviert und wird je nach Einstellung (rot oder grün) ein RF-Signal emittiert bevor Schritt b) wieder aktiviert wird. Wird unter Schritt I) kein Wild detektiert, wird mit Schritt n) geprüft, ob ein RF-Signal empfangen wurde. Falls ein solches empfangen wurde mit Schritt o) geprüft, ob dieses der eingestellten DIP-Einstellung (grün oder blau) entspricht. Im positiven Fall werden im Schritt p) werden die verkehrsseitigen Warnblinker für 30sec mit einer Leuchtkraft von 400 Lux aktiviert und wird kein RF-Signal emittiert bevor wieder Schritt b) aktiviert wird. Wir mit Schritt o) keines der eingestellten RF-Signale identifiziert, wird direkt wieder Schritt b) aktiviert. Wird bei Schritt n) kein RF-Signal empfangen, werden für die Verhinderung von Falschalarmen, bspw. bei Gegenverkehr oder Überholmanövern, folgende Schritte ausgeführt. Falls mit Schritt q) der linksseitige Verkehrs-PIR anspricht, wird Schritt v) aktiviert, d.h. wird geprüft, ob innerhalb drei Sekunden nach diesem Ereignis der rechtsseitige Verkehrs-PIR anspricht. Spricht dieser nicht an, wird Schritt s) aktiviert, d.h. wird der Wildwarner für eine mit der DIP-Schaltung eingestellte Zeit von 3 sec, 4 sec, 5 sec oder 6 sec in den Standby-Modus gesetzt, wird kein RF-Signal gesendet und ist die Wild-Erkennungseinheit inaktiv, und wird danach wieder Schritt b) aktiviert. Spricht der rechtsseitige Verkehrs-PIR nach diesen drei Sekunden an, wird in Schritt v) der Wildwarner für eine Dauer der Zeit zwischen den beiden Ansprech-Signalen plus zwei Sekunden in einen Standby-Modus gesetzt, wird kein RF-Signal emittiert und bleibt die Wild-Erkennungseinheit inaktiv. Sollte der linksseitige Verkehrs-PIR nicht ansprechen, wird Schritt t) aktiviert, d.h. geprüft ob der rechtsseitige Verkehrs-PIR anspricht. Falls dieser nicht anspricht wird wieder Schritt b) aktiviert. Falls der rechtsseitige Verkehrs-PIR anspricht wird Schritt u) ausgeführt. Mit diesem Schritt u) wird geprüft, ob der linksseitige Verkehrs-PIR innerhalb von drei Sekunden nachdem der rechtsseitige Verkehrs-PIR angesprochen hat ebenfalls anspricht. Ist dies nicht der Fall wird Schritt s) aktiviert, d.h. wird der Wildwarner für eine mit der DIP-Schaltung eingestellte Zeit von 3 sec, 4 sec, 5 sec oder 6 sec in den Standby-Modus gesetzt, wird kein RF-Signal gesendet und ist die Wild-Erkennungseinheit inaktiv, und wird danach wieder Schritt b) aktiviert. Spricht der linksseitige Verkehrs-PIR innerhalb von drei Sekunden nachdem der rechtsseitige Verkehrs-PIR angesprochen hat ebenfalls an, wird Schritt v) aktiviert, d.h. wird der Wildwarner für eine Dauer der Zeit zwischen den beiden Ansprech-Signalen plus zwei Sekunden in einen Standby-Modus gesetzt, wird kein RF-Signal emittiert und bleibt die Wild-Erkennungseinheit inaktiv um danach Schritt b) zu aktivieren.

Es versteht sich, dass diese elektronischen Abläufe für das Ausschliessen zusätzlicher Situationen, die zu Falschsignalen führen können, weiter ergänzt werden können.

### Referenzzeichen

- 1: Wildwarner / Warnvorrichtung
- 2: elektronische Komponenten
- 3: autonome Stromversorgung
- 4: Akku
- 5: Solarmodul
- 6: Detektionseinheit
- 6a: Wild-Erkennungseinheit mit PIR-Sensoren
- 6b: Erkennungseinheit mit PIR-Sensoren für den anfahrenden Verkehr
- 6c: Erkennungseinheit mit PIR-Sensoren für den wegfahrenden Verkehr
- 7: Auswerte-/Steuer-Elektronik
- A: Anfahrt-Richtung
- G: Fahrt-Gegenrichtung
- W1: erste Warnvorrichtung für den rollenden Verkehr
- W2: zweite Warnvorrichtung für den rollenden Verkehr
- W3: dritte Warnvorrichtung für den rollenden Verkehr
- 8: Signalgeber
- 9: Sensoren
- 9a: Wild-Detektionsrichtung
- 9b: Detektionsrichtung für den anfahrenden Verkehr
- 9c: Detektionsrichtung für den wegfahrenden Verkehr
- A: anfahrende Richtung
- W: wegfahrende Richtung
- G: Richtung des Gegenverkehrs
- 10: Reflektor
- 11: Gehäuse-Baugruppe
- 12: Halterungs-Baugruppe
- 13: tragende Struktur
- 14: Sockelelement
- 15: Halteklammer
- 16: Kugelgelenk-Anordnung
- 17: Kugelkalotte
- 18: Kugelpfanne
- 19: Verriegelungselement
- 20: Spannelement
- 31: Schraube
- 32: Hülsenmutter
- 33: Zentralachse
- α: Stellwinkel
- 21: PIR-Linse
- 22: Abdeckung
- 23: LED-Leuchte
- 26: Batterie-Abdeckung
- 35: Gehäuseteil
- 36: Batteriefach
- 37: Akku
- 38: Fahrstrasse
- 39: Wild-Erfassungsfeld
- 40: Fahrzeug-Erfassungsfeld

## Patentansprüche

1. Verfahren zur Vermeidung von Wildunfällen, mittels einer Warnvorrichtung (1), deren elektronische Komponenten (2) von einer autonomen Stromversorgung (3), insbesondere einem Akku (4) und einem Solarmodul (5) mit Strom versehen werden,
mit welchem Verfahren
- eine Strasse und deren Umgebung mittels einer Detektionseinheit (6) überwacht wird, um die Anwesenheit und/oder die Art und/oder Bewegungsrichtung und/oder Position eines Fahrzeugs und/oder eines Fahrbahnhindernisses (Wild, Menschen, Gesteinsbrocken, verlorenes Transportgut, etc.) zu detektieren,
wobei bei Annäherung eines Fahrzeuges
- von einer Auswerte-Elektronik (7) ein elektrisches Signal generiert wird,
- mit welchem ein Signalgeber (8) aktiviert wird, um Menschen (auf der Fahrbahn und/oder im Fahrzeug) zu warnen und/oder mit einem sich nähernden Fahrzeug direkt zu kommunizieren und/oder dieses zu steuern und/oder zu regeln,
**dadurch gekennzeichnet, dass**
die Warnvorrichtung (1) unabhängig von der Inklination der tragenden Struktur (13), bspw. ein Leitpfosten, mittels einer bewegbaren Halterungs-Baugruppe (12) in gewünschter Weise ausgerichtet wird.

2. Verfahren nach Anspruch 1, **dadurch gekennzeichnet, dass** die Warnvorrichtung mittels Lagesensoren und/oder einer Kommunikationseinheit zur Optimierung der Rückstrahl-Effizienz, und/oder der Abstrahl-Charakteristik des Signalgebers und/oder der Erkennungssensoren, und/oder eines Kommunikations-Systems automatisch ausgerichtet wird.

3. Warnvorrichtung (1) zum Durchführen des Verfahrens nach Anspruch 1, welche Warnvorrichtung (1)
- ein Gehäuse (11) für mindestens
- eine autonome Stromversorgung (3), insbesondere für mindestens einen Akku (4) und mindestens ein Solarmodul (5), sowie
- eine Detektionseinheit (6),
- eine Auswerte-Elektronik (7) und
- einen Signalgeber (8) umfasst,
**dadurch gekennzeichnet, dass**
diese Warnvorrichtung (1) eine mit dem Gehäuse (11) beweglich verbindbare Halterungs-Baugruppe (12) aufweist, welche an einer tragenden Struktur (13) in Strassennähe, insbesondere an einem Strassenleitpfosten, unabhängig von der Inklination der tragenden Struktur (13), mit Hilfe einer Halterungs-Baugruppe (12) in gewünschter Weise ausrichtbar und befestigbar ist.

4. Warnvorrichtung nach Anspruch 3, **dadurch gekennzeichnet, dass** deren Halterungs-Baugruppe (12) ein fixierbares Sockelelement (14) und eine mittels einer Kugelgelenk-Anordnung (16) daran beweglich befestigte Halteklammer (15) umfasst.

5. Warnvorrichtung nach Anspruch 3, **dadurch gekennzeichnet, dass** deren Halterungs-Baugruppe (12) ein fixierbares Sockelelement (14) aufweist, auf welchem mindestens ein keilförmig ausgebildetes Element drehbar gelagert ist, derart dass durch eine Verdrehung des einen oder der mehreren keilförmigen Elemente relativ zueinander die Lage der Detektionseinheit 6 einstellbar ist.

6. Warnvorrichtung nach Anspruch 3 bis 5, **dadurch gekennzeichnet, dass** im und/oder am der Gehäuse-Baugruppe (11) elektronische Komponenten (2) angebracht sind, mit mindestens einem Solarmodul (5), einer Detektionseinheit (6), einer Auswerte-/Steuer-Elektronik (7) und einen Signalgeber (8) sowie insbesondere mit einer Kommunikations-, resp. Datenübertragungseinheit.

7. Warnvorrichtung nach Anspruch 6, **dadurch gekennzeichnet, dass** die elektronischen Komponenten (2) einen Sensor (6) aufweisen, der mindestens ein Wild-Erfassungsfeld (39) erzeugt, welches einen Erfassungswinkel von über 160°, vorzugsweise 180° aufweist.

8. Warnvorrichtung nach Anspruch 7, **dadurch gekennzeichnet, dass** die Detektionseinheit (6) mit Blenden versehen ist, mit welchen das Wild-Erfassungsfeld (39) einstellbar ist.

9. Warnvorrichtung (1) nach Anspruch 3, **dadurch gekennzeichnet, dass** der Signalgeber (8) für sich annähernde Fahrzeuge ein gerichtetes optisches Warnsignal und/oder mit Hilfe einer Kommunikations-, resp. Datenübertragungseinheit ein Funksignal erzeugt.

10. Warnvorrichtung (1) nach Anspruch 9, **dadurch gekennzeichnet, dass** die Kommunikations-, resp. Datenübertragungseinheit mit den Kommunikations-, resp. Datenübertragungseinheiten benachbarter und/oder gegenüberliegender Warnvorrichtungen (W1, W2, W3) vernetzt ist, um ein Kommunikationssystem, insbesondere ein Funknetz zu bilden.

11. Warnvorrichtung (1) nach Anspruch 10, **dadurch gekennzeichnet, dass** dieses Kommunikationssystem unterschiedliche und insbesondere strassenseitenabhängige Funkfrequenzen aufweist.

12. Warnvorrichtung (1) nach einem der Ansprüche 3 bis 11, **dadurch gekennzeichnet, dass** diese mit einem elektro-mechanischen und/oder elektronischen Diebstahlschutz versehen ist.
